# EUROPEAN PATENT APPLICATION

(11) **EP 4 044 178 A2**
(43) Date of publication of application: **17.08.2022**
(21) Application number: 22176796.5
(22) Date of filing: 01.06.2022
(51) Int. Cl.: G10L 15/22, G10L 15/34

(54) **METHOD AND APPARATUS OF PERFORMING VOICE WAKE-UP IN MULTIPLE SPEECH ZONES, METHOD AND APPARATUS OF PERFORMING SPEECH RECOGNITION IN MULTIPLE SPEECH ZONES, DEVICE, AND STORAGE MEDIUM**

(30) Priority: 08.06.2021 CN 202110639837
(71) Applicant: Apollo Intelligent Connectivity (Beijing) Technology Co., Ltd., Beijing 100176 (CN)
(72) Inventor: ZHOU, Yi, Beijing, 100176 (CN); ZUO, Shengyong, Beijing, 100176 (CN)
(74) Representative: Zimmermann, Tankred Klaus

(57) **Abstract**

A method of performing a voice wake-up in multiple speech zones is provided, which relates to a field of artificial intelligence, in particular to fields of speech technology, natural language processing, speech interaction, etc., and may be used in Internet of vehicles, autonomous driving, and other scenarios. A specific implementation scheme includes: acquiring N channels of audio signals, wherein each channel of audio signal corresponds to one of N speech zones; inputting, based on a corresponding relationship between the N channels of audio signals and N synchronous audio processing threads in a wake-up engine, each channel of audio signal into a corresponding audio processing thread; and determining, in response to a thread with a wake-up result occurring in the N synchronous audio processing threads, a speech zone corresponding to the thread with the wake-up result as an awakened speech zone in the N speech zones.

## Description

### TECHNICAL FIELD

The present disclosure relates to a field of artificial intelligence, in particular to fields of speech technology, natural language processing, speech interaction, etc., and may be used in Internet of vehicles, autonomous driving, and other scenarios. Specifically, the present disclosure relates to a method and an apparatus of performing a voice wake-up in multiple speech zones, a method and an apparatus of performing a speech recognition in multiple speech zones, a device, and a storage medium.

### BACKGROUND

With a development of the speech technology, multi-channel pickup (such as multi-channel microphone) and voice wake-up in multiple speech zones and speech recognition technology appear in a vehicle speech-based system. An interior space of a vehicle may be divided into a plurality of sub-spaces, and each sub-space may include a speech zone. For example, the vehicle may include two or four or six speech zones.

### SUMMARY

The present disclosure relates to a method and an apparatus of performing a voice wake-up in multiple speech zones, a method and an apparatus of performing a speech recognition in multiple speech zones, a device, a storage medium, and a computer program product.

According to an aspect of the present disclosure, there is provided a method of performing a voice wake-up in multiple speech zones, including: acquiring N channels of audio signals, wherein each channel of audio signal corresponds to one of N speech zones; inputting, based on a corresponding relationship between the N channels of audio signals and N synchronous audio processing threads in a wake-up engine, each channel of audio signal into a corresponding audio processing thread; and determining, in response to a thread with a wake-up result occurring in the N synchronous audio processing threads, a speech zone corresponding to the thread with the wake-up result as an awakened speech zone in the N speech zones.

According to another aspect of the present disclosure, there is provided a method of performing a speech recognition in multiple speech zones, including: determining a first awakened speech zone in N speech zones according to the method of performing the voice wake-up in multiple speech zones described in the embodiments of the present disclosure; acquiring an audio signal captured by a pickup provided in the first awakened speech zone; and transmitting the audio signal to a speech recognition engine to perform the speech recognition.

According to another aspect of the present disclosure, there is provided an apparatus of performing a voice wake-up in multiple speech zones, including: a first acquisition module configured to acquire N channels of audio signals, wherein each channel of audio signal corresponds to one of N speech zones; an input module configured to input, based on a corresponding relationship between the N channels of audio signals and N synchronous audio processing threads in a wake-up engine, each channel of audio signal into a corresponding audio processing thread; and a first determination module configured to determine, in response to a thread with a wake-up result occurring in the N synchronous audio processing threads, a speech zone corresponding to the thread with the wake-up result as an awakened speech zone in the N speech zones.

According to another aspect of the present disclosure, there is provided an apparatus of performing a speech recognition in multiple speech zones, including: a fourth determination module configured to determine a first awakened speech zone in N speech zones using the apparatus of performing the voice wake-up in multiple speech zones described in the embodiments of the present disclosure; a second acquisition module configured to acquire an audio signal captured by a pickup provided in the first awakened speech zone; and a first speech recognition module configured to transmit the audio signal to a speech recognition engine to perform the speech recognition.

According to another aspect of the present disclosure, there is provided an electronic device, including: a wake-up engine including N synchronous audio processing threads, wherein each audio processing thread corresponds to a speech zone and is configured to process a channel of audio signal captured by a pickup provided in the speech zone, the wake-up engine is configured to monitor a processing result of the N synchronous audio processing threads and determine a speech zone corresponding to a thread with a wake-up result in the N synchronous audio processing threads as an awakened speech zone in N speech zones.

According to another aspect of the present disclosure, there is provided a vehicle terminal, including: a wake-up engine including N synchronous audio processing threads, wherein each audio processing thread corresponds to a vehicle speech zone and is configured to process a channel of audio signal captured by a pickup provided in the vehicle speech zone, the wake-up engine is configured to monitor a processing result of the N synchronous audio processing threads and determine a vehicle speech zone corresponding to a thread with a wake-up result in the N synchronous audio processing threads as an awakened speech zone in N vehicle speech zones.

According to another aspect of the present disclosure, there is provided a vehicle, including: the apparatus of performing the voice wake-up in multiple speech zones described in the embodiments of the present disclosure; and the apparatus of performing the speech recognition in multiple speech zones described in the embodiments of the present disclosure.

According to another aspect of the present disclosure, there is provided a vehicle, including the vehicle terminal described in the embodiments of the present disclosure.

According to another aspect of the present disclosure, there is provided an electronic device, including: at least one processor; and a memory communicatively connected to the at least one processor, wherein the memory stores instructions executable by the at least one processor, and the instructions, when executed by the at least one processor, allow the at least one processor to implement the method described in the embodiments of the present disclosure.

According to another aspect of the present disclosure, there is provided a non-transitory computer-readable storage medium having computer instructions stored thereon, wherein the computer instructions allow a computer to implement the method described in the embodiments of the present disclosure.

According to another aspect of the present disclosure, there is provided a computer program product containing a computer program, wherein the computer program, when executed by a processor, is allowed to implement the method described in the embodiments of the present disclosure.

It should be understood that content described in this section is not intended to identify key or important features in the embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used to understand the solution better and do not constitute a limitation to the present disclosure. wherein:
FIG. 1 schematically shows a system architecture suitable for the embodiments of the present disclosure.
FIG. 2 schematically shows a flowchart of a method of performing a voice wake-up in multiple speech zones according to the embodiments of the present disclosure.
FIG. 3 schematically shows a schematic diagram of performing a voice wake-up in multiple speech zones according to the embodiments of the present disclosure.
FIG. 4 schematically shows a flowchart of a method of performing a speech recognition in multiple speech zones according to the embodiments of the present disclosure.
FIG. 5 schematically shows a block diagram of an apparatus of performing a voice wake-up in multiple speech zones according to the embodiments of the present disclosure.
FIG. 6 schematically shows a block diagram of an apparatus of performing a speech recognition in multiple speech zones according to the embodiments of the present disclosure.
FIG. 7 schematically shows a block diagram of an electronic device for implementing the embodiments of the present disclosure.

### DETAILED DESCRIPTION OF EMBODIMENTS

Exemplary embodiments of the present disclosure will be described below with reference to the accompanying drawings, which include various details of the embodiments of the present disclosure to facilitate understanding and should be considered as merely exemplary. Therefore, those of ordinary skilled in the art should realize that various changes and modifications may be made to the embodiments described herein without departing from the scope and spirit of the present disclosure. Likewise, for clarity and conciseness, descriptions of well-known functions and structures are omitted in the following description.

It should be understood that with an emergence of multi-speech-zone, users in different speech zones may wake up a vehicle host, so that a purpose of performing a speech recognition for a user in a specific speech zone may be achieved.

At present, a voice wake-up in multiple speech zones system generally requires a plurality of wake-up engines. For example, a four-speech-zone voice wake-up system requires four wake-up engines, and a six-speech-zone voice wake-up system requires six wake-up engines.

It should be understood that the more the wake-up engines included in the voice wake-up in multiple speech zones system, the more central processing unit (CPU) resources and memory resources occupied by the system. The more resources occupied by the voice wake-up in multiple speech zones system, the greater the impact on other applications in the vehicle system, and even a normal operation of other applications may be affected.

In view of this, the embodiments of the present disclosure propose a voice wake-up scheme with multi speech zones and single wake-up engine, which may not only support a voice wake-up with multi speech zones, but also reduce an overhead of CPU, memory and other resources in the vehicle host, so as to ensure a performance of the vehicle host.

The present disclosure will be described in detail below with reference to the accompanying drawings and specific embodiments.

A system architecture of a method and an apparatus of performing a voice wake-up in multiple speech zones and a method and an apparatus of performing a speech recognition in multiple speech zones suitable for the embodiments of the present disclosure will be described below.

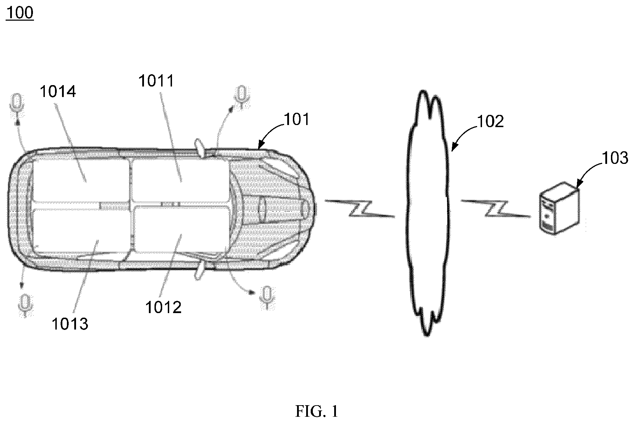

FIG. 1 schematically shows a system architecture suitable for the embodiments of the present disclosure. It should be noted that FIG. 1 is only an example of a system architecture in which the embodiments of the present disclosure may be applied, so as to help those skilled in the art to understand the technical content of the present disclosure. It does not mean that the embodiments of the present disclosure may not be applied to other environments or scenarios.

As shown in FIG. 1, a system architecture 100 may include a vehicle 101, a network 102, and a server 103.

It should be noted that in this system architecture, an interior space of the vehicle 101 may be divided into four sub-spaces, and each sub-space is called a speech zone. That is, the interior space of the vehicle 101 may include four speech zones 1011, 1012, 1013 and 1014. For example, the speech zone 1011 may be a driver seat zone, the speech zone 1012 may be a front passenger seat zone, the speech zone 1013 may be a right rear seat zone, the speech zone 1014 may be a left rear seat zone, and so on. A pickup, such as a microphone, may be provided in each speech zone. Therefore, in this system architecture, a driver, a front passenger and rear passengers each may wake up the vehicle host in a corresponding speech zone and conduct a speech interaction with the awakened vehicle host.

It should be noted that in the embodiments of the present disclosure, the vehicle host of the vehicle 101 may include only one wake-up engine. The wake-up engine may include a plurality of synchronous audio processing threads (for example, for the system architecture, the wake-up engine of the vehicle host of the vehicle 101 may include four synchronous audio processing threads), and each audio processing thread is used to process an audio signal captured by a pickup provided in a corresponding speech zone. At the same time, no matter which audio processing thread has a wake-up result, that is, no matter which audio processing thread has an audio signal that triggers a corresponding wake-up word model, it indicates that the vehicle host has been awakened. However, it should be understood that if an audio processing thread has a wake-up result, it indicates that a speech zone corresponding to the audio processing thread has been awakened, and a speech recognition needs to be performed subsequently on the audio signal from the speech zone.

Exemplarily, a wake-up word may include "hi", "hello", "hello, xx". Assuming that a driver in the speech zone 1011 says "hi", an audio processing thread (such as thread 1) corresponding to the speech zone 1011 in the wake-up engine of the vehicle host of the vehicle 101 may have a wake-up result in theory. That is, a wake-up word model called by the wake-up engine for the thread 1 may be triggered in theory by an audio signal representing "hi", which indicates that the speech zone 1011 has been awakened. Subsequently, an audio signal captured by a pickup provided in the speech zone 1011 may be transmitted to a speech recognition module for a speech recognition. That is, the driver in the speech zone 1011 may subsequently conduct a speech interaction with the vehicle host.

It should be noted that in some embodiments of the present disclosure, when performing the speech recognition, the audio signal may be transmitted to the cloud server 103 for the speech recognition. Alternatively, in other embodiments of the present disclosure, when performing the speech recognition, the vehicle host of the vehicle may perform the speech recognition on the audio signal.

In other words, in some embodiments of the present disclosure, a speech recognition module (including a speech recognition engine) of the vehicle 101 may be provided in the cloud server 103. Such a scheme may reduce a burden of the vehicle. Alternatively, in other embodiments of the present disclosure, the speech recognition module (including the speech recognition engine) of the vehicle 101 may be provided in the vehicle host of the vehicle. Such a scheme may increase the burden of the vehicle.

With multi speech zones and single wake-up engine provided by the system architecture, a voice wake-up in multiple speech zones may be supported, and an overhead of CPU, memory and other resources in the vehicle host may be reduced, so that the performance of the vehicle host may be ensured, that is, a normal operation of other applications of the vehicle may be ensured.

It should be understood that the number of speech zones included in the vehicle 101 in FIG. 1 is merely schematic. The interior space of the vehicle 101 may be divided into any number of speech zones according to an implementation need.

An application scenario of a method and an apparatus of performing a voice wake-up in multiple speech zones and a method and an apparatus of performing a speech recognition in multiple speech zones suitable for the embodiments of the present disclosure will be described below.

It should be noted that the voice wake-up in multiple speech zones and speech recognition scheme provided by the embodiments of the present disclosure may be applied to a voice wake-up and speech recognition scenario with multi speech zones such as Internet of vehicles, autonomous driving, etc. In addition, the voice wake-up in multiple speech zones and speech recognition scheme provided by the embodiments of the present disclosure may be applied to a voice wake-up and speech recognition scenario with multi speech zones such as Internet of things, supermarkets, homes, etc., which will not be described in detail in the present disclosure.

According to the embodiments of the present disclosure, the present disclosure provides a method of performing a voice wake-up in multiple speech zones.

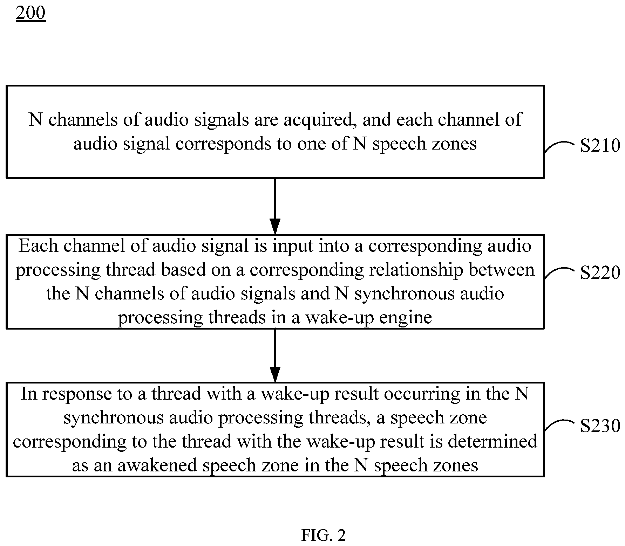

FIG. 2 schematically shows a flowchart of a method of performing a voice wake-up in multiple speech zones according to the embodiments of the present disclosure.

As shown in FIG. 2, a method 200 of performing a voice wake-up in multiple speech zones may include operations S210 to S230.

In operation S210, N channels of audio signals are acquired, and each channel of audio signal corresponds to one of N speech zones.

In operation S220, each channel of audio signal is input into a corresponding audio processing thread based on a corresponding relationship between the N channels of audio signals and N synchronous audio processing threads in a wake-up engine.

In operation S230, in response to a thread with a wake-up result occurring in the N synchronous audio processing threads, a speech zone corresponding to the thread with the wake-up result is determined as an awakened speech zone in the N speech zones.

It should be noted that in the embodiments of the present disclosure, the N channels of audio signals acquired in operation S210 are obtained by performing a voice capture on the N speech zones simultaneously.

In an embodiment of the present disclosure, the method 200 may be applied to a vehicle terminal. The vehicle terminal may include only one wake-up engine, and the wake-up engine may include N synchronous audio processing threads. Each audio processing thread corresponds to a vehicle speech zone and is used to process a channel of audio signal captured by a pickup provided in the vehicle speech zone. The wake-up engine is used to monitor a processing result of the N synchronous audio processing threads and determine a vehicle speech zone corresponding to a thread with a wake-up result in the N synchronous audio processing threads as an awakened speech zone in the N vehicle speech zones.

Exemplarily, a vehicle may have four speech zones, including speech zone 1 to speech zone 4. Each of the four speech zones is provided with a microphone. For example, microphone 1 to microphone 4 are provided in speech zone 1 to speech zone 4, respectively. Only one wake-up engine is provided in the vehicle terminal, and the wake-up engine includes four audio processing threads, namely thread 1 to thread 4. The thread 1 corresponds to the speech zone 1 and is used to process an audio signal stream captured by the microphone 1, the thread 2 corresponds to the speech zone 2 and is used to process an audio signal stream captured by the microphone 2, the thread 3 corresponds to the speech zone 3 and is used to process an audio signal stream captured by the microphone 3, and the thread 4 corresponds to the speech zone 4 and is used to process an audio signal stream captured by the microphone 4. Four channels of audio signals respectively captured by the microphone 1 to the microphone 4 at the same time are input into the thread 1 to the thread 4 respectively according to the above corresponding relationship for processing. If any thread in the thread 1 to the thread 4 has a wake-up result, it indicates that a speech zone in the speech zone 1 to the speech zone 4 has been awakened. For example, if the thread 1 has a wake-up result, it indicates that the speech zone 1 has been awakened. In the embodiments of the present disclosure, a user may wake up the vehicle host in various speech zones in the vehicle and conduct a speech interaction with the vehicle host.

Alternatively, in an embodiment of the present disclosure, the method 200 may be applied to an electronic device. The electronic device (which may be a terminal device) may include only one wake-up engine (also called a voice wake-up engine), and the wake-up engine may include N synchronous audio processing threads. Each audio processing thread corresponds to a speech zone and is used to process a channel of audio signal captured by a pickup provided in the speech zone. The wake-up engine is used to monitor a processing result of the N synchronous audio processing threads and determine a speech zone corresponding to a thread with a wake-up result in the N synchronous audio processing threads as an awakened speech zone in the N speech zones.

Exemplarily, an apartment has a master bedroom, two secondary bedrooms, a living room, a kitchen and a bathroom, with a total of six sub-spaces. Each sub-space may be provided with a microphone and may serve as a speech zone. The six sub-spaces correspond to six speech zones including speech zone 1 to speech zone 6, respectively. Six microphones including microphone 1 to microphone 6 are provided in the six speech zones, respectively. An electronic device (such as a smart speaker) applied in the apartment may have only one wake-up engine, and the wake-up engine includes six audio processing threads, namely thread 1 to thread 6. The thread 1 corresponds to the speech zone 1 and is used to process an audio signal stream captured by the microphone 1, the thread 2 corresponds to the speech zone 2 and is used to process an audio signal stream captured by the microphone 2, the thread 3 corresponds to the speech zone 3 and is used to process an audio signal stream captured by the microphone 3, the thread 4 corresponds to the speech zone 4 and is used to process an audio signal stream captured by the microphone 4, the thread 5 corresponds to the speech zone 5 and is used to process an audio signal stream captured by the microphone 5, the thread 6 corresponds to the speech zone 6 and is used to process an audio signal stream captured by the microphone 6. Six channels of audio signals respectively captured by the microphone 1 to the microphone 6 at the same time are input into the thread 1 to the thread 6 respectively according to the above corresponding relationship for processing. If any thread in the thread 1 to the thread 6 has a wake-up result, it indicates that a speech zone in the speech zone 1 to the speech zone 6 has been awakened. For example, if the thread 1 has a wake-up result, it indicates that the speech zone 1 has been awakened. In the embodiments of the present disclosure, the user may wake up the smart speaker in various sub-spaces in the apartment and conduct a speech interaction with the smart speaker.

It should be noted that in the embodiments of the present disclosure, N is an integer greater than 1.

Through the multi speech zone single wake-up engine scheme provided by the embodiments of the present disclosure, a voice wake-up in multiple speech zones may be supported, and an overhead of CPU, memory and other resources in the vehicle host or the smart speaker may be reduced, so that the performance of the vehicle host or the smart speaker may be ensured, that is, a normal operation of other applications of the vehicle or the smart speaker may be ensured.

In addition, in a related art, a voice wake-up scheme with multi speech zones and multi wake-up engines may involve a complex callback and cause a difficult control of a service logic. For example, in the multi speech zone multi wake-up engine scheme, a plurality of wake-up engines are provided in the vehicle host. Each wake-up engine generally has a plurality of engine states, and the plurality of wake-up engines may have numerous engine states, so that the engine state of the vehicle host is quite complex and difficult to manage.

In the embodiments of the present disclosure, the voice wake-up scheme with multi speech zones and single wake-up engine is adopted. Compared with the multi speech zone multi wake-up engine scheme, the callback is simpler and the service logic may be controlled more easily.

Moreover, through the embodiments of the present disclosure, a capability boundary of a product (e.g., a vehicle terminal, an electronic device such as a smart speaker, etc.) may be extended, so that the voice wake-up scheme is more friendly to a low-end product.

As an optional embodiment, the method may further include the following operations.

In response to a thread with a wake-up result occurring in the N synchronous audio processing threads, it is determined whether the N synchronous audio processing threads include a plurality of threads simultaneously having the wake-up result.

In response to determining that the N synchronous audio processing threads include a plurality of threads simultaneously having the wake-up result, a target thread with a strongest input audio signal in the plurality of threads simultaneously having the wake-up result is determined.

Determining the speech zone corresponding to the thread with the wake-up result as the awakened speech zone in the N speech zones may include determining a target speech zone corresponding to the target thread as the awakened speech zone in the N speech zones.

In the embodiments of the present disclosure, when the user speaks in a speech zone, a corresponding audio signal may be captured simultaneously by pickups in a plurality of speech zones. In this case, in order to prevent wake-up word models called by a plurality of threads from all waking up and causing a system confusion, a location information of the user may be determined first, and then a speech zone of the user may be awakened according to the location information of the user, so that a speech recognition is subsequently performed on the audio signal captured by the pickup in the speech zone of the user.

It should be understood that in the embodiments of the present disclosure, an intensity of each channel of audio signal may be determined first according to an energy contained in the channel of audio signal, then a channel of strongest audio signal may be determined, and a wake-up word model called by the audio processing thread into which this channel of audio signal is input may be triggered to a wake-up state. The speech zone where the pickup capturing this channel of audio signal is located is determined as a true speech zone of the user. Subsequently, the audio signal captured by the pickup in the true speech zone of the user may be transmitted to a speech recognition module for speech processing.

In other words, in the embodiments of the present disclosure, if a plurality of audio processing threads have the wake-up result at the same time, the thread into which the channel of strongest audio signal is input may be determined as the actually awakened speech zone according to the intensity of each channel of audio signal. During subsequent speech recognition, the audio signal stream captured by the pickup capturing this channel of audio signal may be transmitted to the speech recognition module for speech recognition.

Exemplarily, a vehicle may have four speech zones, including speech zone 1 to speech zone 4. Each of the four speech zones is provided with a microphone. For example, microphone 1 to microphone 4 are provided in speech zone 1 to speech zone 4, respectively. Only one wake-up engine is provided in the vehicle terminal, and the wake-up engine includes four audio processing threads, namely thread 1 to thread 4. The thread 1 corresponds to the speech zone 1 and is used to process an audio signal stream captured by the microphone 1, the thread 2 corresponds to the speech zone 2 and is used to process an audio signal stream captured by the microphone 2, the thread 3 corresponds to the speech zone 3 and is used to process an audio signal stream captured by the microphone 3, and the thread 4 corresponds to the speech zone 4 and is used to process an audio signal stream captured by the microphone 4. Four channels of audio signals respectively captured by the microphone 1 to the microphone 4 at the same time are input into the thread 1 to the thread 4 respectively according to the above corresponding relationship for processing. If the thread 1 and the thread 2 both have a wake-up result but the channel of audio signal input into the thread 1 has a greater intensity, it may be considered that the speech zone 1 is actually awakened. After the speech zone 1 is awakened, the audio signal stream captured by the microphone 1 may be continuously acquired and transmitted to the speech recognition module for speech recognition, so as to achieve the speech interaction between the user in the speech zone 1 and the vehicle host.

According to the embodiments of the present disclosure, in a case that a plurality of audio processing threads in the wake-up engine have the wake-up result, the channel of the strongest signal may be selected for wake-up, so that the user may conduct the speech interaction with the vehicle host more smoothly.

As an optional embodiment, acquiring the N channels of audio signals may include the following operations.

N channels of audio signals are captured simultaneously using N pickups, and each pickup is provided in one of N speech zones.

The N channels of audio signals captured simultaneously by the N pickups are combined into a frame of audio data and transmitted to the wake-up engine.

Corresponding N channels of audio signals are extracted from the audio data through the wake-up engine, so as to be input into corresponding audio processing threads for processing according to the corresponding relationship.

In the embodiments of the present disclosure, a plurality of channels of audio signals simultaneously acquired may be combined into a frame of audio data (also called an audio array) first, and then the multi-channel audio signals (that is, a plurality of audio data components) contained in the audio data may be simultaneously transmitted to the same wake-up engine frame by frame. Then, in the wake-up engine, each frame of audio data is split into corresponding multi-channel audio signals according to a previously agreed assembly rule, and each channel of audio signal is input into the corresponding audio processing thread according to the predetermined corresponding relationship for speech processing.

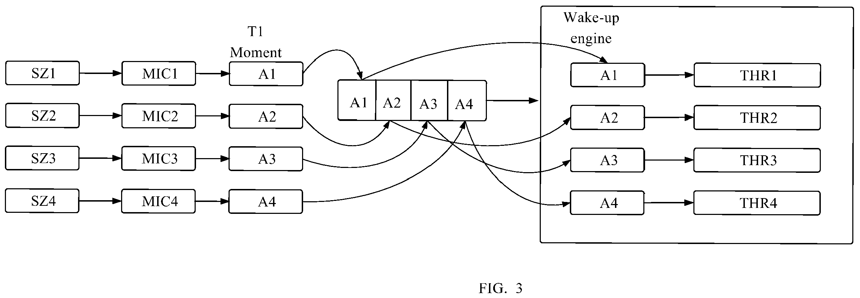

Exemplarily, as shown in FIG. 3, a vehicle has four speech zones, including speech zone 1 to speech zone 4 (SZ1 to SZ4). Each of the four speech zones is provided with a microphone. For example, microphone 1 to microphone 4 (MIC1 to MIC4) are provided in the speech zone 1 to the speech zone 4, respectively. Four-channel audio signals simultaneously captured by the four microphones at any time (for example, four-channel audio signals captured at time T1 include audio signal 1 to audio signal 4 (A1 to A4)) may be assembled into a frame of audio data in an order shown in the figure. In this way, the multi-channel audio signals captured simultaneously for all speech zones may be simultaneously input into the wake-up engine in the vehicle host.

Continuing to refer to FIG. 3, the wake-up engine includes four threads, namely thread 1 to thread 4 (THR1 to THR4). THR1 corresponds to SZ1 and is used to process the audio signal stream captured by MIC1, THR2 corresponds to SZ2 and is used to process the audio signal stream captured by MIC2, THR3 corresponds to SZ3 and is used to process the audio signal stream captured by MIC3, and THR4 corresponds to SZ4 and is used to process the audio signal stream captured by MIC4.

Continuing to refer to FIG. 3, after the audio data assembled from the audio signal 1 to the audio signal 4 is input into the wake-up engine, the wake-up engine may separate the audio signal 1 to the audio signal 4 from the audio data, then input A1 into THR1 for speech processing, input A2 into THR1 for speech processing, input A3 into THR1 for speech processing, and input A4 into the THR1 for speech processing.

It should be understood that in the embodiments of the present disclosure, for the four-channel audio signals captured at the time T1, if only THR1 has a wake-up result, it means that the SZ1 is awakened, and if both THR1 and THR2 have the wake-up result and A1 is stronger than A2, it also means that the SZ1 is actually awakened. After SZ1 is awakened, the audio signal stream captured by the MIC1 may be subsequently transmitted to the corresponding speech recognition module for speech recognition, so as to achieve the speech interaction between the user in SZ1 and the vehicle host.

In the embodiments of the present disclosure, each channel of audio signal may be assembled according to a specific data format. For example, the N-channel audio signals captured simultaneously may be assembled into an N-dimensional audio array in the order of audio signal 1 to audio signal N, and the N-dimensional audio array may be transmitted as a frame of audio data to the wake-up engine.

Through the embodiments of the present disclosure, the use of a special data transmission method (in which the multi-channel audio signals captured at each time are transmitted as a frame of audio data) may ensure that the single wake-up engine may monitor a plurality of speech zones at the same time.

In addition, in the related art, a voice wake-up scheme with multi speech zones and multi wake-up engines may involve a complex callback and cause a difficult control of a service logic. For example, in the multi speech zone multi wake-up engine scheme, a plurality of wake-up engines are provided in the vehicle host, and each wake-up engine is provided with a data transmission line, so that the data transmission lines of the vehicle host is quite complex and difficult to manage. For another example, in the multi speech zone and multi wake-up engine scheme, a plurality of wake-up engines in the vehicle host acquire corresponding audio data in the form of a plurality of data lines, so that it is difficult for the plurality of wake-up engines to acquire the multi-channel audio data captured at the same time.

In the embodiments of the present disclosure, the voice wake-up scheme with multi speech zones and single wake-up engine is adopted. Compared with the multi speech zone and multi wake-up engine scheme, the callback is simpler and the service logic may be controlled more smoothly. For example, due to the use of the special data transmission method described above, it is ensured that the single wake-up engine may simultaneously monitor a plurality of speech zones, that is, the wake-up engine may simultaneously acquire the multi-channel audio data captured at the same time.

According to the embodiments of the present disclosure, the present disclosure provides a method of performing a speech recognition in multiple speech zones.

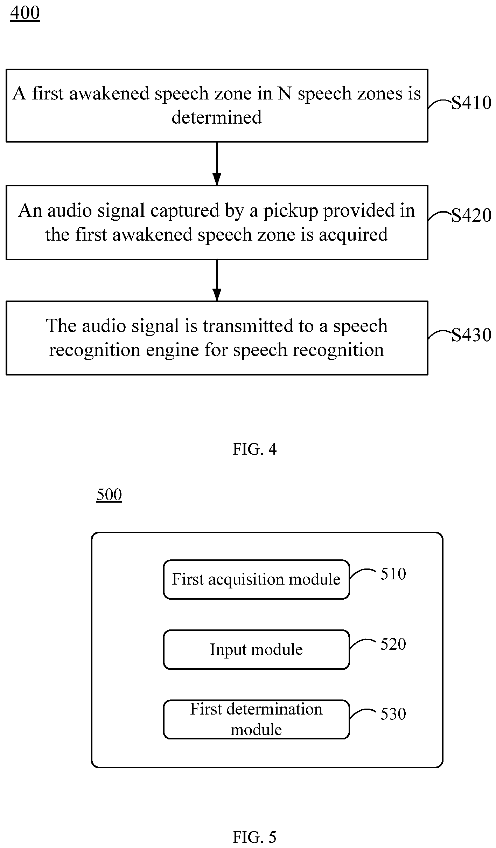

FIG. 4 schematically shows a flowchart of a method of performing a speech recognition in multiple speech zones according to the embodiments of the present disclosure.

As shown in FIG. 4, a method 400 of performing a speech recognition in multiple speech zones may include operations S410 to S430.

In operation S410, a first awakened speech zone in N speech zones is determined.

In operation S420, an audio signal captured by a pickup provided in the first awakened speech zone is acquired.

In operation S430, the audio signal is transmitted to a speech recognition engine for speech recognition.

It should be noted that in the embodiments of the present disclosure, the awakened speech zone (the first awakened speech zone) in the N speech zones may be determined using the method of performing the voice wake-up in multiple speech zones provided by any one or more of the embodiments described above, which will not be repeated here.

After the awakened speech zone is determined, the audio signal stream captured for the speech zone may be subsequently transmitted to the speech recognition module for speech processing. The specific method may refer to the description in the embodiments described above, which will not be repeated here.

The multi speech zone single wake-up engine scheme provided by the embodiments of the present disclosure may not only support the voice wake-up of multi speech zones, but also reduce the overhead of CPU, memory and other resources in the vehicle host or smart speaker, so as to ensure the performance of the vehicle host or smart speaker, that is, the normal operation of other applications of the vehicle or smart speaker may be ensured.

In addition, in the related art, the use of the voice wake-up scheme with multi speech zones and multi wake-up engines may involve a complex callback and cause a difficult control of a service logic. For example, in the multi speech zone multi wake-up engine scheme, a plurality of wake-up engines are provided in the vehicle host. Each wake-up engine generally has a plurality of engine states, and the plurality of wake-up engines may have numerous engine states, so that the engine state of the vehicle host is quite complex and difficult to manage.

In the embodiments of the present disclosure, the voice wake-up scheme with multi speech zones and single wake-up engine is adopted. Compared with the scheme with multi speech zone multi wake-up engine, the callback is simpler and the service logic may be controlled more easily.

Moreover, through the embodiments of the present disclosure, a capability boundary of a product (e.g., a vehicle terminal, an electronic device such as a smart speaker, etc.) may be extended, so that the voice wake-up scheme is more friendly to a low-end product.

As an optional embodiment, the method may further include performing the following operations after determining the first awakened speech zone in the N speech zones.

In response to the pickup failing to capture an audio signal within a preset time period, the speech recognition channel of the first awakened speech zone is closed.

The method of performing the multi speech zone voice wake-up provided in any one or more of the embodiments described above is re-performed to re-determine the awakened speech zone in the N speech zones.

In the embodiments of the present disclosure, if no user conducts a speech interaction with the device within a specified preset time period after a speech zone is awakened, the currently awakened speech zone may be closed. At the same time, the awakened speech zone in the N speech zones may be re-determined by using the method of performing the voice wake-up in multiple speech zones provided by the embodiments described above, and then the speech recognition may be performed.

It should be noted that in the embodiments of the present disclosure, the awakened speech zone in the N speech zones may be re-determined by using the method of performing the voice wake-up in multiple speech zones provided by any one or more of the embodiments described above, which will not be repeated here.

Through the embodiments of the present disclosure, a speech recognition system of the device may be started and stopped flexibly according to a preset strategy.

As an optional embodiment, the method may further include performing the following operations in the process of speech recognition.

In response to a second awakened speech zone appearing in the N speech zones, the speech recognition channel of the first awakened speech zone is closed. An authority of the second awakened speech zone is higher than an authority the first awakened speech zone.

An audio signal captured by a pickup provided in the second awakened speech zone is acquired.

The audio signal is transmitted to the speech recognition engine for speech recognition.

In the embodiments of the present disclosure, in the process of performing the speech recognition for a speech zone, if a wake-up signal appears in another speech zone, and the authority of the other speech zone is higher than the authority the speech zone for which the speech recognition is currently performed, then the speech recognition channel of the speech zone for which the speech recognition is currently performed may be closed, and the audio signal stream in the other speech zone may be continuously captured and transmitted to the speech recognition module for speech recognition.

Through the embodiments of the present disclosure, various speech zones may be flexibly controlled to achieve a purpose of preferentially processing a speech command issued from the speech zone with higher authority, so as to avoid that an emergency event may not be handled in time.

According to the embodiments of the present disclosure, the present disclosure further provides an apparatus of performing a voice wake-up in multiple speech zones.

FIG. 5 schematically shows a block diagram of an apparatus of performing a voice wake-up in multiple speech zones according to the embodiments of the present disclosure.

As shown in FIG. 5, an apparatus 500 of performing a voice wake-up in multiple speech zones includes a first acquisition module 510, an input module 520, and a first determination module 530.

The first acquisition module 510 is used to acquire N channels of audio signals, and each channel of audio signal corresponds to one of N speech zones.

The input module 520 is used to input each channel of audio signal into a corresponding audio processing thread based on a corresponding relationship between the N channels of audio signals and N synchronous audio processing threads in a wake-up engine.

The first determination module 530 is used to determine, in response to a thread with a wake-up result occurring in the N synchronous audio processing threads, a speech zone corresponding to the thread with the wake-up result as an awakened speech zone in the N speech zones.

As an optional embodiment, the apparatus may further include: a second determination module used to determine, in response to the thread with the wake-up result occurring in the N synchronous audio processing threads, whether the N synchronous audio processing threads include a plurality of threads simultaneously having the wake-up result; and a third determination module used to determine, in response to determining the N synchronous audio processing threads including a plurality of threads simultaneously having the wake-up result, a target thread with a strongest input audio signal in the plurality of threads simultaneously having the wake-up result. The first determination module is further used to determine a target speech zone corresponding to the target thread as the awakened speech zone in the N speech zones.

As an optional embodiment, the first acquisition module includes: a capture unit used to capture N channels of audio signals simultaneously using N pickups, each pickup is provided in one of the N speech zones; a transmission unit used to combine the N channels of audio signals simultaneously captured by the N pickups into a frame of audio data and transmit the frame of audio data to the wake-up engine; and an extraction unit used to extract corresponding N channels of audio signals from the audio data through the wake-up engine, so that the input module inputs the extracted N channels of audio signals respectively into corresponding audio processing threads according to the corresponding relationship for processing.

It should be understood that the embodiments of the apparatus of performing the voice wake-up in multiple speech zones of the present disclosure are correspondingly identical or similar to the embodiments of the method of performing the voice wake-up in multiple speech zones of the present disclosure, and the technical problems solved and the technical effects achieved are correspondingly identical or similar to each other, which will not be repeated here.

According to the embodiment of the present disclosure, the present disclosure further provides an apparatus of performing a speech recognition in multiple speech zones.

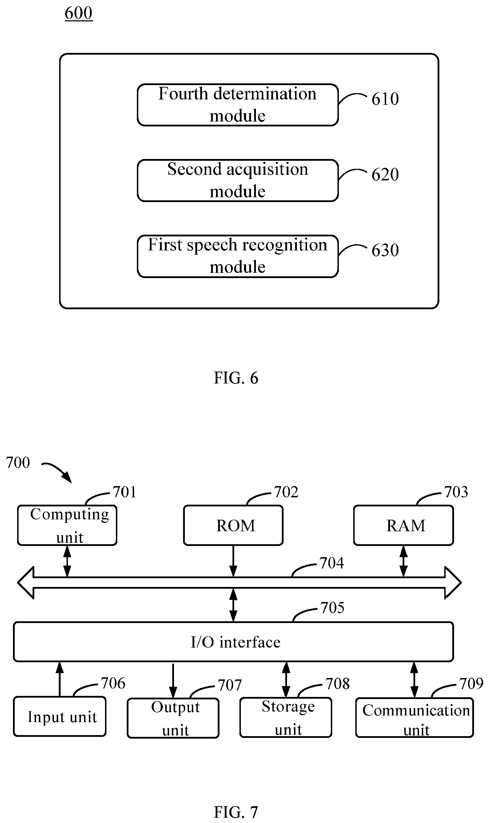

FIG. 6 schematically shows a block diagram of an apparatus of performing a speech recognition in multiple speech zones according to the embodiments of the present disclosure.

As shown in FIG. 6, an apparatus 600 of performing a speech recognition in multiple speech zones includes a fourth determination module 610, a second acquisition module 620, and a first speech recognition module 630.

The fourth determination module 610 is used to determine the first awakened speech zone in the N speech zones using the apparatus of performing the speech recognition in multiple speech zones according to the embodiments of the present disclosure.

The second acquisition module 620 is used to acquire an audio signal captured by the pickup provided in the first awakened speech zone.

The first speech recognition module 630 is used to transmit the audio signal to the speech recognition engine for speech recognition.

As an optional embodiment, the apparatus further includes: a first speech zone closing module used to close a speech recognition channel of the first awakened speech zone in response to the pickup failing to capture an audio signal within a preset time period after the first awakened speech zone in the N speech zones is determined; and a fifth determination module used to re-determine an awakened speech zone in the N speech zones using the apparatus of performing the voice wake-up in multiple speech zones according to the embodiments of the present disclosure.

As an optional embodiment, the apparatus further includes: a second speech zone closing module used to close, in a process of the speech recognition module performing the speech recognition, the speech recognition channel of the first awakened speech zone in response to a second awakened speech zone appearing in the N speech zones, an authority of the second awakened speech zone is higher than an authority the first awakened speech zone; a third acquisition module used to acquire an audio signal captured by a pickup provided in the second awakened speech zone; and a second speech recognition module used to transmit the audio signal to the speech recognition engine to perform the speech recognition.

It should be understood that the embodiments of the apparatus of performing the speech recognition in multiple speech zones of the present disclosure are correspondingly identical or similar to the embodiments of the method of performing the speech recognition in multiple speech zones of the present disclosure, and the technical problems solved and the technical effects achieved are correspondingly identical or similar to each other, which will not be repeated here.

According to the embodiments of the present disclosure, the present disclosure further provides a vehicle.

The vehicle may include the apparatus of performing the multi speech zone voice wake-up in any of the above-described embodiments of the present disclosure and the apparatus of performing the speech recognition in multiple speech zones in any of the above-described embodiments of the present disclosure.

It should be noted that the apparatus of performing the multi speech zone voice wake-up and the apparatus of performing the speech recognition in multiple speech zones in the embodiments of the present disclosure may refer to the description of the apparatus of performing the multi speech zone voice wake-up and the apparatus of performing the speech recognition in multiple speech zones and the description of the corresponding method provided by any one or more of the embodiments described above, which will not be repeated here.

According to the embodiments of the present disclosure, the present disclosure further provides another vehicle.

The vehicle may include the vehicle terminal in any of the above-described embodiments of the present disclosure.

It should be noted that the vehicle terminal in the embodiments of the present disclosure may refer to the description of the vehicle terminal provided by any one or more of the above-described embodiments, which will not be repeated here.

According to the embodiments of the present disclosure, the present disclosure further provides an electronic device, a readable storage medium, and a computer program product.

FIG. 7 shows a schematic block diagram of an exemplary electronic device 700 for implementing the embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 7, the electronic device 700 may include a computing unit 701, which may perform various appropriate actions and processing based on a computer program stored in a read-only memory (ROM) 702 or a computer program loaded from a storage unit 708 into a random access memory (RAM) 703. Various programs and data required for the operation of the electronic device 700 may be stored in the RAM 703. The computing unit 701, the ROM 702 and the RAM 703 are connected to each other through a bus 704. An input/output (I/O) interface 705 is further connected to the bus 704.

Various components in the electronic device 700, including an input unit 706 such as a keyboard, a mouse, etc., an output unit 707 such as various types of displays, speakers, etc., a storage unit 708 such as a magnetic disk, an optical disk, etc., and a communication unit 709 such as a network card, a modem, a wireless communication transceiver, etc., are connected to the I/O interface 705. The communication unit 709 allows the electronic device 700 to exchange information/data with other devices through a computer network such as the Internet and/or various telecommunication networks.

The computing unit 701 may be various general-purpose and/or special-purpose processing components with processing and computing capabilities. Some examples of the computing unit 701 include but are not limited to a central processing unit (CPU), a graphics processing unit (GPU), various dedicated artificial intelligence (AI) computing chips, various computing units running machine learning model algorithms, a digital signal processor (DSP), and any appropriate processor, controller, microcontroller, and so on. The computing unit 701 may perform the various methods and processes described above, such as the method of performing the voice wake-up in multiple speech zones and the method of performing the speech recognition in multiple speech zones. For example, in some embodiments, the method of performing the voice wake-up in multiple speech zones and the method of performing the speech recognition in multiple speech zones may be implemented as a computer software program that is tangibly contained on a machine-readable medium, such as a storage unit 708. In some embodiments, part or all of a computer program may be loaded and/or installed on the electronic device 700 via the ROM 702 and/or the communication unit 709. When the computer program is loaded into the RAM 703 and executed by the computing unit 701, one or more steps of the method of performing the voice wake-up in multiple speech zones and the method of performing the speech recognition in multiple speech zones described above may be performed. Alternatively, in other embodiments, the computing unit 701 may be configured to perform the method of performing the voice wake-up in multiple speech zones and the method of performing the speech recognition in multiple speech zones in any other appropriate way (for example, by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from the storage system, the at least one input device and the at least one output device, and may transmit the data and instructions to the storage system, the at least one input device, and the at least one output device.

Program codes for implementing the method of the present disclosure may be written in any combination of one or more programming languages. These program codes may be provided to a processor or a controller of a general-purpose computer, a special-purpose computer, or other programmable data processing devices, so that when the program codes are executed by the processor or the controller, the functions/operations specified in the flowchart and/or block diagram may be implemented. The program codes may be executed completely on the machine, partly on the machine, partly on the machine and partly on the remote machine as an independent software package, or completely on the remote machine or the server.

In the context of the present disclosure, the machine readable medium may be a tangible medium that may contain or store programs for use by or in combination with an instruction execution system, device or apparatus. The machine readable medium may be a machine-readable signal medium or a machine-readable storage medium. The machine readable medium may include, but not be limited to, electronic, magnetic, optical, electromagnetic, infrared or semiconductor systems, devices or apparatuses, or any suitable combination of the above. More specific examples of the machine readable storage medium may include electrical connections based on one or more wires, portable computer disks, hard disks, random access memory (RAM), read-only memory (ROM), erasable programmable read-only memory (EPROM or flash memory), optical fiber, convenient compact disk read-only memory (CD-ROM), optical storage device, magnetic storage device, or any suitable combination of the above.

In order to provide interaction with users, the systems and techniques described here may be implemented on a computer including a display device (for example, a CRT (cathode ray tube) or LCD (liquid crystal display) monitor) for displaying information to the user), and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server (also known as cloud computing server or cloud host), which is a host product in the cloud computing service system to solve difficult management and weak business expansion existing in traditional physical hosts and VPS (Virtual Private Server, or VPS for short) services. The server may also be a server of a distributed system, or a server combined with a blockchain.

In the technical solution of the present disclosure, the collection, storage, use, processing, transmission, provision, disclosure, and application of the user's personal information involved are all in compliance with relevant laws and regulations, take essential confidentiality measures, and do not violate public order and good customs.

In the technical solution of the present disclosure, authorization or consent is obtained from the user before the user's personal information is obtained or collected.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method (200) of performing a voice wake-up in multiple speech zones, comprising:
acquiring (S210) N channels of audio signals (A1-A4), wherein each channel of audio signal corresponds to one of N speech zones (SZ1-SZ4);
inputting (S220), based on a corresponding relationship between the N channels of audio signals (A1-A4) and N synchronous audio processing threads (THR1-THR4) in a wake-up engine, each channel of audio signal into a corresponding audio processing thread; and
determining (S230), in response to a thread with a wake-up result occurring in the N synchronous audio processing threads (THR1-THR4), a speech zone corresponding to the thread with the wake-up result as an awakened speech zone in the N speech zones (SZ1-SZ4).

2. The method according to claim 1, further comprising:
determining, in response to the thread with the wake-up result occurring in the N synchronous audio processing threads (THR1-THR4), whether the N synchronous audio processing threads (THR1-THR4) comprise a plurality of threads simultaneously having the wake-up result; and
determining, in response to determining the N synchronous audio processing threads (THR1-THR4) comprising a plurality of threads simultaneously having the wake-up result, a target thread with a strongest input audio signal in the plurality of threads simultaneously having the wake-up result;
wherein the determining a speech zone corresponding to the thread with the wake-up result as an awakened speech zone in the N speech zones (SZ1-SZ4) comprises: determining a target speech zone corresponding to the target thread as the awakened speech zone in the N speech zones (SZ1-SZ4).

3. The method according to claim 1 or 2, wherein the acquiring N channels of audio signals (A1-A4) comprises:
capturing N channels of audio signals (A1-A4) simultaneously using N pickups (MIC1-MIC4), wherein each pickup is provided in one of the N speech zones (SZ1-SZ4);
combining the N channels of audio signals (A1-A4) simultaneously captured by the N pickups (MIC1-MIC4) into a frame of audio data and transmit the frame of audio data to the wake-up engine; and
extracting corresponding N channels of audio signals (A1-A4) from the audio data through the wake-up engine, so as to input the extracted N channels of audio signals (A1-A4) respectively into corresponding audio processing threads for processing according to the corresponding relationship.

4. A method (400) of performing a speech recognition in multiple speech zones, comprising:
determining (S410) a first awakened speech zone in N speech zones (SZ1-SZ4) according to the method of performing the voice wake-up in multiple speech zones according to any one of claims 1 to 3;
acquiring (S420) an audio signal captured by a pickup provided in the first awakened speech zone; and
transmitting (S430) the audio signal to a speech recognition engine to perform the speech recognition.

5. The method according to claim 4, further comprising: after determining the first awakened speech zone in the N speech zones (SZ1-SZ4),
closing a speech recognition channel of the first awakened speech zone in response to the pickup failing to capture an audio signal within a preset time period; and
re-determining an awakened speech zone in the N speech zones (SZ1-SZ4) according to the method of performing the voice wake-up in multiple speech zones according to any one of claims 1 to 3.

6. The method according to claim 4 or 5, further comprising: in a process of performing the speech recognition,
closing a speech recognition channel of the first awakened speech zone in response to a second awakened speech zone appearing in the N speech zones (SZ1-SZ4), wherein an authority of the second awakened speech zone is higher than an authority the first awakened speech zone;
acquiring an audio signal captured by a pickup provided in the second awakened speech zone; and
transmitting the audio signal to the speech recognition engine to perform the speech recognition.

7. An apparatus (500) of performing a voice wake-up in multiple speech zones, comprising:
a first acquisition module (510) configured to acquire N channels of audio signals, wherein each channel of audio signal corresponds to one of N speech zones;
an input module (520) configured to input, based on a corresponding relationship between the N channels of audio signals and N synchronous audio processing threads in a wake-up engine, each channel of audio signal into a corresponding audio processing thread; and
a first determination module (530) configured to determine, in response to a thread with a wake-up result occurring in the N synchronous audio processing threads, a speech zone corresponding to the thread with the wake-up result as an awakened speech zone in the N speech zones.

8. An apparatus (600) of performing a speech recognition in multiple speech zones, comprising:
a fourth determination module (610) configured to determine a first awakened speech zone in N speech zones using the apparatus of performing the voice wake-up in multiple speech zones according to claim 7;
a second acquisition module (620) configured to acquire an audio signal captured by a pickup provided in the first awakened speech zone; and
a first speech recognition module (630) configured to transmit the audio signal to a speech recognition engine to perform the speech recognition.

9. An electronic device, comprising:
a wake-up engine comprising N synchronous audio processing threads, wherein each audio processing thread corresponds to a speech zone and is configured to process a channel of audio signal captured by a pickup provided in the speech zone, the wake-up engine is configured to monitor a processing result of the N synchronous audio processing threads and determine a speech zone corresponding to a thread with a wake-up result in the N synchronous audio processing threads as an awakened speech zone in N speech zones.

10. A vehicle terminal, comprising:
a wake-up engine comprising N synchronous audio processing threads, wherein each audio processing thread corresponds to a vehicle speech zone and is configured to process a channel of audio signal captured by a pickup provided in the vehicle speech zone, the wake-up engine is configured to monitor a processing result of the N synchronous audio processing threads and determine a vehicle speech zone corresponding to a thread with a wake-up result in the N synchronous audio processing threads as an awakened speech zone in N vehicle speech zones.

11. A vehicle, comprising:
the apparatus of performing the voice wake-up in multiple speech zones according to claim 7; and
the apparatus of performing the speech recognition in multiple speech zones according to claim 8.

12. A vehicle, comprising the vehicle terminal according to claim 10.

13. An electronic device, comprising:
at least one processor; and
a memory communicatively connected to the at least one processor, wherein the memory stores instructions executable by the at least one processor, and the instructions, when executed by the at least one processor, allow the at least one processor to implement the method of any one of claims 1 to 6.

14. A non-transitory computer-readable storage medium having computer instructions stored thereon, wherein the computer instructions allow a computer to implement the method of any one of claims 1 to 6.

15. A computer program product containing a computer program, wherein the computer program, when executed by a processor, is allowed to implement the method of any one of claims 1 to 6.
